# EUROPEAN PATENT SPECIFICATION

(11) **EP 4 416 193 B1**
(45) Date of publication and mention of the grant of the patent: **19.03.2025**
(21) Application number: 22844040.0
(22) Date of filing: 20.12.2022
(51) Int. Cl.: C08F 2/00, C08F 2/01, C08F 2/14, C08F 210/16

(54) **PROCESS FOR PREPARING ETHYLENE POLYMERS IN A SLURRY POLYMERIZATION**
VERFAHREN ZUR HERSTELLUNG VON ETHYLENPOLYMEREN IN EINER SUSPENSIONSPOLYMERISATION
PROCÉDÉ DE PRÉPARATION DE POLYMÈRES D'ÉTHYLÈNE DANS UNE POLYMÉRISATION EN SUSPENSION

(30) Priority: 22.12.2021 EP 21216856
(43) Date of publication of application: 21.08.2024
(73) Proprietor: Basell Polyolefine GmbH, 50389 Wesseling (DE)
(72) Inventor: DAMM, Elke, 61118 Bad Vilbel (DE); PRANG, Harald, 50374 Erftstadt (DE); KUEHL, Reinhard, 53332 Bornheim (DE)
(74) Representative: LyondellBasell
(86) International application number: PCT/EP2022/086851
(87) International publication number: WO 2023/118046

(56) References cited:
- WO-A1-2013/186299
- WO-A1-2015/197561
- US-B2- 10 370 307

## Description

### FIELD OF THE INVENTION

The present disclosure provides a process for polymerizing ethylene or copolymerizing ethylene and one or more C₃-C₁₂-1 alkenes in a slurry polymerization. The present disclosure provides in particular a process for polymerizing ethylene or copolymerizing ethylene and one or more C₃-C₁₂-1 alkenes in a slurry polymerization which is carried out in a reactor system comprising a polymerization reactor and one or more heat exchangers located outside the polymerization reactor. The present disclosure provides furthermore a process for polymerizing ethylene or copolymerizing ethylene and one or more C₃-C₁₂-1 alkenes in a slurry polymerization comprising a cleaning step.

### BACKGROUND OF THE INVENTION

Slurry polymerization processes for preparing ethylene polymers are established methods for producing ethylene polymers and, for example, disclosed in EP 0 905 152 A1 or WO 2012/028591 A1. Such processes are often carried out in a series of reactors and so allow to set different reaction conditions in the polymerization reactors and thereby to produce different polymer compositions in the individual polymerization reactors. Accordingly produced multimodal ethylene copolymers are characterized by having, for example, a good combination of product properties and processability. Slurry processes for preparing ethylene polymers commonly employ a hydrocarbon or a hydrocarbon mixture as diluent. The slurry is thus commonly a suspension of ethylene polymer particles in a liquid medium which comprises, besides the hydrocarbon diluent as main component, also further components like dissolved ethylene, comonomers, aluminum alkyls, and hydrogen and dissolved reaction products like oligomers and waxes. Principles of producing multi-modal ethylene copolymer in a slurry polymerization in a series of reactors are, e.g., disclosed in F. Alt et al., Macromol. Symp. 2001, 163, 135-143.

Slurry polymerization systems for preparing ethylene polymers can use external heat exchangers in a reactor recirculation loop to remove heat produced in the ethylene polymerization reactions. Caused by a reduced solubility at lower temperature, low molecular weight waxes, which are produced in the reactors as a byproduct, can solidify when the slurry flows through the cooler and contacts the cold walls of the heat exchangers. This may foul the heat exchangers, i.e. may cause a build-up of an oligomeric or polymeric layer on the cold walls of the heat exchangers, decreasing the heat transfer in the heat exchanger and reducing their efficiency in heat removal. Such build-up of non-desired walls layers can also occur at the walls of the polymerization reactors. Various methods have been disclosed for reducing heat exchanger or reactor wall fouling. For example, WO 2015/197561 A1 discloses a process for the preparation of polyethylene in which external heat exchangers are cooled by a coolant having a temperature of 29°C or higher. Nonetheless, the build-up of wall layers cannot be fully avoided and a cleaning of the polymerization system may be needed from time to time.

Methods for cleaning polymerization systems for preparing ethylene polymers include flushing the polymerization system with an hydrocarbon at ambient temperature. Such flushing however only allows to remove loose particles at the inner surface walls. Another option is mechanical cleaning, for example by hydro-jet devices. However, the inner surface of the polymerization system may be negatively affected, for example by rust formation. Additionally, the mechanical cleaning requires a lot of efforts. An elaborated preparation of the reactor system is needed so that the reactor can be opened, the reactor system has to be entered and afterwards all traces of water and humidity need to be removed from the reactor system.

A preferred method for cleaning polymerization systems for preparing ethylene polymers is cleaning the reactor system with hot hydrocarbons. For example, WO 2015/197561 A1 discloses that for cleaning the heat exchangers of a reactor system comprising a polymerization reactor and one or more heat exchangers located outside the polymerization reactor, a heat exchanger is typically isolated and a hot hydrocarbon like hexane, usually of about 155°C, is circulated through the heat exchanger to re-dissolve deposits.

US 10,370,307 B2 discloses a process for the oligomerization of ethylene into alphaolefins, comprising a step for the oligomerization of ethylene, a step for the deactivation of the catalyst and a step for separation of the products. The reactor is provided with a cooling loop by means of which at least a portion of the reaction effluent is moved through at least two switchable heat exchangers, said heat exchangers being cleaned alternately by means of an integrated cleaning device.

Cleaning a reactor system with hot hydrocarbons has a high cleaning efficiency, does not demand opening of the reactor system, does not affect the inner surface of the polymerization system and can be carried out in relatively short time with a limited amount of manpower. For cleaning the reactor system with hot hydrocarbons, it is needed to replace the slurry within the reactor system by a hydrocarbon or a hydrocarbon mixture and then heat the hydrocarbon to the appropriate temperature. This may be carried out by using the external heat exchangers and/or the reactor cooling jackets as heaters, and instead of cooling these tempering devices by a coolant, the devices are heated, commonly by using low or medium pressure steam. However, using steam as heating medium does not allow a smooth and easy control of the temperature of the reactor system and steam hammering with cavitation cannot be avoided. Furthermore, repeatedly changing the tempering medium from a coolant, commonly water, to steam and vice versa may result in corrosion of the external heat exchangers and polymerization reactor cooling jackets. Corrosion in heat exchangers on the one hand leads to reduced heat transfer due to increase roughness of the wall surface and, on the other hand, severe corrosion may also lead to leakage of tempering medium requiring a replacement of the heat exchangers or of components of the heat exchangers from time to time.

Accordingly, there is a need to provide a process for polymerizing ethylene or copolymerizing ethylene and one or more C₃-C₁₂-1-alkenes in a slurry polymerization in a reactor system which allows to clean the reactor system with hot hydrocarbon easily and fast in a controlled manner and without the need of replacing defective external heat exchangers or polymerization reactor cooling jackets, and which nonetheless allows to prepare the ethylene polymers with the targeted combination of polymer properties in a process not having operational problems.

### SUMMARY OF THE INVENTION

The present disclosure provides a process for polymerizing ethylene or copolymerizing ethylene and one or more C₃-C₁₂-1-alkenes in a slurry polymerization at temperatures of from 40 to 150°C and pressures from 0.1 to 5 MPa in the presence of a polymerization catalyst,
wherein the process is carried out in a reactor system comprising
   - a polymerization reactor configured to have a content in liquid form;
   - an agitator for agitating the reactor content;
   - one or more first heat exchangers located outside the polymerization reactor for cooling or heating the reactor content;
   - one or more circulation pumps for withdrawing the reactor content from the polymerization reactor and circulating the reactor content through the one or more first heat exchangers; and
   - a closed loop of a tempering medium for cooling or heating the one or more first heat exchangers, which closed loop is equipped with a second heat exchangers for cooling the tempering medium and is equipped with a third heat exchangers for heating the tempering medium, and
wherein, during the polymerization of ethylene or copolymerizing ethylene and the one or more C₃-C₁₂-1-alkenes,
   - the polymerization reactor is filled with a slurry of ethylene polymer particles in a liquid medium comprising a hydrocarbon diluent;
   - the slurry is cooled by withdrawing slurry from the polymerization reactor, cooling the slurry in the one or more first heat exchangers and returning the cooled slurry to the polymerization reactor;
   - the temperature of the tempering medium cooling the one or more first heat exchangers is in the range from 20°C to 50°C; and
   - the tempering medium is cooled in the second heat exchanger by a coolant having a temperature from -20° to 45°C.

In some embodiments, the reactor system is a part of a series of two, three or more reactor systems comprising each a polymerization reactor and one or more first heat exchangers located outside the polymerization reactor for cooling or heating the reactor content.

In some embodiments, the first heat exchangers are double pipe heat exchangers, preferably having a surface roughness Rₐ of less than 5 µm determined according to ASME B46.1.

In some embodiments, the polymerization reactors are further equipped at the reactor outside with tempering jackets.

In some embodiments, tempering jackets consist of a series of half-pipes attached to the outside of the polymerization reactors.

In some embodiments, the tempering medium for cooling or heating the tempering jacket is the tempering medium for cooling or heating the one or more first heat exchangers.

In some embodiments, the process comprises a cleaning step for cleaning the polymerization reactor, for cleaning the one or more first heat exchangers or for cleaning the polymerization reactor and the one or more first heat exchangers, wherein the cleaning step comprises the sub-steps of
terminating the polymerization of ethylene or the copolymerization of ethylene and one or more C₃-C₁₂-1-alkenes in the reactor system and discharging the slurry of ethylene polymer particles from the reactor system until the reactor system is empty;
introducing a hydrocarbon solvent into the emptied reactor system thereby forming a cleaning fill within the reactor system;
heating the cleaning fill within the reactor system to a temperatures from 100 to 180°C, wherein
   - the agitator within the polymerization reactor is operated;
   - the cleaning fill is heated by withdrawing parts of the cleaning fill from the polymerization reactor, heating the parts of the cleaning fill in the one or more first heat exchangers and returning the heated parts of the cleaning fill to the polymerization reactor; and
   - the tempering medium is heated in the third heat exchanger by providing the third heat exchanger with a heating medium having a temperature from 150°C to 250°C;
maintaining the cleaning fill within the reactor system at the temperature from 100°C to 180°C for from 4 to 120 hours with continued circulation of the cleaning fill through the one or more first heat exchangers and continued operation of the agitator;
discharging the cleaning fill from the reactor system until the reactor system is empty; and
resuming polymerizing ethylene or copolymerizing ethylene and one or more C₃-C₁₂-1 alkenes in the reactor system.

In some embodiments, after discharging the slurry of ethylene polymer particles from the reactor system and before introducing the cleaning fill into the reactor system a sub-step of flushing the reactor system with hydrocarbon diluent is carried out.

In some embodiments, the hydrocarbon solvent is introduced into the emptied reactor system until a liquid level of the cleaning fill within the polymerization reactor is at least as high as the liquid level of the slurry within the polymerization reactor during polymerization.

In some embodiments, the introduction of the hydrocarbon solvent into the reactor system is terminated after a cleaning fill within the reactor system has been formed and thereafter the maintenance of the cleaning fill within the reactor system at the temperature from 100°C to 180°C and the discharge of the cleaning fill from the reactor system occur without introduction of additional hydrocarbon solvent.

In some embodiments, during the maintenance of the cleaning fill within the reactor system at a temperature from 100°C to 180°C, hydrocarbon solvent is continuously introduced into the reactor system and cleaning fill is continuously discharged from the reactor system.

In some embodiments, for emptying the reactor system before resuming the polymerization, the circulation of the cleaning fill from the polymerization reactor through the one or more first heat exchangers is terminated and the contents of the one or more first heat exchangers and the polymerization reactor are subsequently discharged.

In some embodiments, the cleaning fill discharged from the reactor system is transferred into an agitated evaporation vessel which is configured to allow withdrawal of hydrocarbon solvent by evaporation from a liquid medium comprising such hydrocarbon solvent.

In some embodiments, the discharge of the cleaning fill from the reactor system into the agitated distillation vessel occurs by a pressure difference between the cleaning fill within the reactor system and the agitated distillation vessel.

In some embodiments, the obtained ethylene polymers are bimodal or multimodal ethylene polymers.

### BRIEF DESCRIPTION OF THE DRAWINGS

Figure 1 shows schematically a set-up for preparing multimodal ethylene polymers in a series of three polymerization reactors by a slurry polymerization process.
Figure 2 shows schematically a set-up of a reactor system for carrying out the process of the present disclosure for polymerizing ethylene or copolymerizing ethylene and one or more C₃-C₁₂-1-alkenes.

### DETAILED DESCRIPTION OF THE INVENTION

The present disclosure provides a process for polymerizing ethylene or copolymerizing ethylene and one or more C₃-C₁₂-1-alkenes in a slurry polymerization at temperatures from 40 to 150°C and pressures of from 0.1 to 20 MPa in the presence of a polymerization catalyst. The C₃-C₁₂-1-alkenes may be linear or branched. Preferred C₃-C₁₂-1-alkenes are linear C₃-C₁₀-1-alkenes such as propylene, 1-butene, 1-pentene, 1-hexene, 1-heptene, 1-octene, or 1-decene or branched C₂-C₁₀-1-alkenes such as 4-methyl-1-penten. It is also possible to polymerize ethylene with mixtures of two or more C₃-C₁₂-1-alkenes. Preferred comonomers are C₃-C₈-1-alkenes, in particular 1-butene, 1-pentene, 1-hexene, 1-heptene and/or 1-octene. In prepared ethylene copolymers, the amount of units which are derived from incorporated comonomers is preferably from 0.01 wt.% to 25 wt.%, more preferably from 0.05 wt.% to 15 wt.% and in particular from 0.1 wt.% to 12 wt.%. Particular preference is given to processes in which ethylene is copolymerized with from 0.1 wt.% to 12 wt.% of 1-hexene and/or 1-butene and especially from 0.1 wt.% to 12 wt.% of 1-butene.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using singlesite catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type, preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

The process of the present disclosure is a polymerization process carried out as a slurry polymerization. Such slurry polymerizations, which are also designated as suspension polymerizations, take place in a liquid medium which comprises a hydrocarbon diluent and in which the produced ethylene polymer is insoluble and forms solid particles. Depending on the conditions within the respective polymerization reactor, the otherwise liquid medium of the slurry can also be in supercritical state under the conditions within the polymerization reactor The solids content of the slurry is generally in the range of from 10 to 80 wt.%, preferably in the range of from 20 to 40 wt.%.

In preferred embodiments, the liquid medium comprises besides the hydrocarbon diluent as main component further components like, for example, dissolved monomers or comonomers, dissolved cocatalysts or scavengers like aluminum alkyls, dissolved reaction auxiliaries like hydrogen or dissolved reaction products of the polymerization reaction like oligomers or waxes. Suitable hydrocarbon diluents should be inert, i.e. should not decompose under reaction conditions. Such hydrocarbon diluents are for example hydrocarbons having from 3 to 12 carbon atoms, and in particular saturated hydrocarbons like isobutane, butane, propane, isopentane, pentane, hexane or octane, or a mixture of these. In preferred embodiments, the hydrocarbon diluent is a hydrocarbon mixture. For producing hydrocarbon mixtures from a raw material, a less high demand for separating the components of the raw material is needed than for producing a specific hydrocarbon, and accordingly hydrocarbon mixtures are economically more attractive as diluent, but show the same diluent performance as specific hydrocarbons. However, hydrocarbon mixtures may have a boiling point range.

The hydrocarbon diluent preferably has a boiling point which is significantly different from those of the monomers and comonomers used in order to make it possible for these starting materials to be recovered from a mixture by distillation. Such hydrocarbon diluents are for example hydrocarbons having a boiling point above 40°C or even above 60°C or mixtures comprising a high proportion of these hydrocarbons. Thus, in preferred embodiments of the present disclosure, the polymerization takes place in a liquid medium comprising more than 50 wt.% of saturated hydrocarbons having a boiling point of above 60°C at 0.1 MPa or even comprising more than 80 wt.% of saturated hydrocarbons having a boiling point of above 60°C at 0.1 MPa.

The process of the present disclosure is carried out at temperatures in the range from 40 to 150°C, preferably from 50 to 130°C and particularly preferably from 60 to 90°C, and at pressures from 0.1 to 5 MPa and preferably from 0.15 to 3 MPa and particularly preferably from 0.2 to 2 MPa, wherein these pressures, as all pressures given in the present disclosure, have to be understood as being absolute pressures, i.e. pressure having the dimension MPa (abs).

In preferred embodiments of the present disclosure, the polymerization is carried out in a series of at least two polymerization reactors which are connected in series. There is no limit to the number of reactors of such a series, however preferably the series consist of two, three or four reactors and most preferably of two or three reactors. If a series of polymerization reactors is used in the process of the present disclosure, the polymerization conditions in the polymerization reactors can differ, for example by the nature and/or the amount of comonomers or by different concentrations of polymerization auxiliaries such as hydrogen.

The ethylene polymers are usually obtained as powder, that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable technics are e.g. vibrating sieve analysis or sieve analysis under an air jet.

The density of preferred ethylene polymers obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

In preferred embodiments, the ethylene polymers prepared by the process of the present disclosure have a MFR_{21.6} at a temperature of 190°C under a load of 21.6 kg, determined according to DIN EN ISO 1133:2005, condition G, from 0.5 to 300 g/10 min, more preferably from 1 to 100 g/10 min, even more preferably of from 1.2 to 100 g/10 min and in particular from 1.5 to 50 g/10 min.

The ethylene polymers obtained by the process of the present disclosure can be monomodal, bimodal or multimodal ethylene polymers. Preferably, the ethylene polymers are bimodal or multimodal ethylene polymers. The term "multimodal" hereby refers to the modality of the obtained ethylene copolymer and indicates that the ethylene copolymer comprises at least two fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization reactors. Such polymers can be obtained from polymerizing olefins in a series of two or more polymerization reactors under different reaction conditions. It is however also possible to obtain such bimodal or multimodal polyolefins by employing mixed catalysts. In addition to the molecular weight distribution, the polyolefin can also have a comonomer distribution, wherein preferably the average comonomer content of polymer chains with a higher molecular weight is higher than the average comonomer content of polymer chains with a lower molecular weight. The term "multimodal" as used herein shall include also "bimodal".

In preferred embodiments of the process of the present disclosure, the polymerization is carried out in a series of polymerization reactors and an ethylene homopolymer, preferably a low molecular weight ethylene homopolymer, is prepared in the first polymerization reactor and an ethylene copolymer, preferably a high molecular weight ethylene copolymer is prepared in a subsequent polymerization reactor. To be able to prepare an ethylene homopolymer in the first polymerization reactor, no comonomer is fed to the first polymerization reactor, neither directly nor as component of a feed stream or a recycle stream which is introduced into the first polymerization reactor of the series of polymerization reactors. The so obtained multimodal ethylene copolymers preferably comprise from 35 to 65 % by weight of ethylene homopolymer prepared in the first polymerization reactor and from 35 to 65 % by weight of ethylene copolymer prepared in the subsequent polymerization reactor. If the series of polymerization reactors comprises one are more prepolymerization reactors, the prepolymerization is preferably carried without adding comonomers.

In other preferred embodiments of the present disclosure, the ethylene polymer is prepared in a series of three polymerization reactors, i.e. in a first polymerization reactor and two subsequent polymerization reactors, wherein the ethylene polymer prepared in the first polymerization reactor is an ethylene homopolymer, preferably a low molecular weight ethylene homopolymer, the ethylene polymer prepared in one of the subsequent polymerization reactors is an ethylene copolymer, preferably a high molecular weight copolymer, and the ethylene polymer prepared in the other subsequent polymerization reactor is an ethylene copolymer of a higher molecular weight, preferably an ultrahigh molecular weight copolymer. The so obtained multimodal ethylene copolymers preferably comprise from 30 to 60 % by weight, more preferably from 45 to 55 % by weight of ethylene homopolymer prepared in the first polymerization reactor, from 30 to 65 % by weight, more preferably from 20 to 40 % by weight of ethylene copolymer prepared in one subsequent polymerization reactor, and from 1 to 30 % by weight, more preferably from 15 to 30 % by weight of higher molecular weight ethylene copolymer prepared in the other subsequent polymerization reactor.

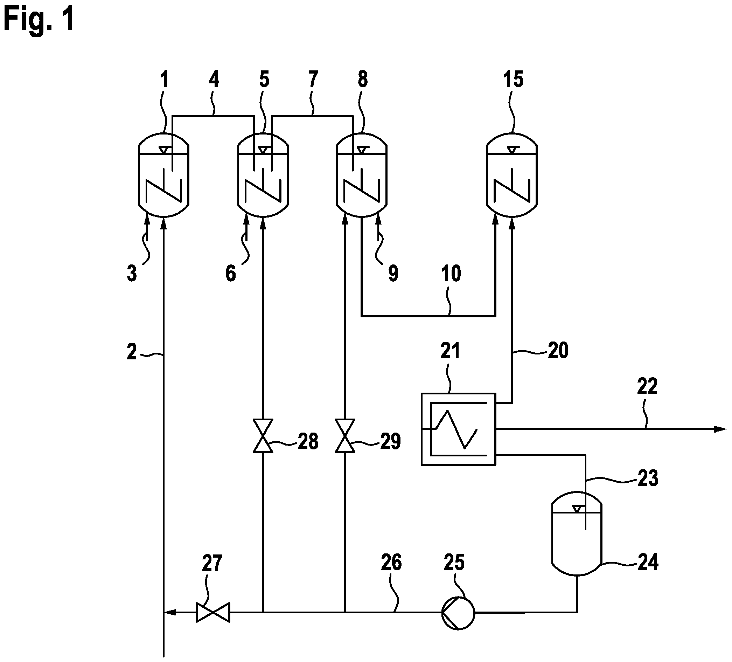

Figure 1 shows schematically a set-up for preparing multimodal ethylene polymers in a series of three polymerization reactors by a slurry polymerization process.

The diluent for polymerizing ethylene or copolymerizing ethylene and one or more C₃-C₁₂-1-alkenes in slurry in the first polymerization reactor (1) is fed to the reactor via feeding line (2) while the other components of the reaction mixture like catalyst, ethylene, possible comonomers and polymerization auxiliaries are fed to the reactor via one or more feeding lines (3). As result of the polymerization in reactor (1), a slurry of solid polyolefin particle in a liquid medium is formed. This slurry is fed via line (4) to the second polymerization reactor (5) where further polymerization occurs. Fresh comonomer or further components of the reaction mixture can be fed to reactor (5) via one or more feeding lines (6). The slurry of reactor (5) is thereafter fed via line (7) to the third polymerization reactor (8) in which additional polymerization is carried out. One or more feeding lines (9) allow supplementary feeding of comonomer or further components of the reaction mixture to reactor (8).

The slurry of solid polyolefin particle in the liquid medium formed in reactor (8) is continuously transferred via line (10) to collecting vessel (15). The slurry is then passed via line (20) to centrifuge (21), where the solid polyolefin particles are separated from the liquid medium. The isolated polyolefin particles, which after removal of the liquid medium still have from 10 to 30 wt.-% of residual moisture, i.e. of residual liquid medium, are transferred via line (22) to a dryer (not shown) and thereafter to a pelletizing unit (not shown).

The isolated liquid medium is transferred via line (23) to a further collecting vessel (24) and from there by means of pump (25) via line (26) to the polymerization reactors (1), (5) and/or (8). For controlling and regulating the transfer of the liquid medium to reactors (1), (5) and/or (8), line (26) and its branch-offs are equipped with valves (27), (28) and (29).

The process of the present disclosure is carried out in a reactor system comprising a polymerization reactor configured to have a content in liquid form, i.e. configured to have a content which can, for example, be a slurry of polymer particle in a liquid medium or a solution of a polymer in a solvent. The reactor system further comprises an agitator for agitating the reactor content. The reactors of such reactors systems are commonly designated as stirred tank reactors.

Preferred polymerization reactors are cylindrical polymerization reactors which comprise a cylindrical reactor wall, a bottom reactor head connected to the cylindrical reactor wall at a bottom tangent and a top reactor head connected to the cylindrical reactor wall at a top tangent. The cylindrical polymerization reactors have preferably an inner diameter D which corresponds to the inner diameter of the cylindrical reactor wall and a height H which is the distance from the bottom tangent to the top tangent measured along the central axis of the cylindrical polymerization reactor. Such cylindrical polymerization reactors have preferably a height/diameter ratio (H/D) from 1.5 to 4 and more preferably a height/diameter ratio (H/D) from 2.5 to 3.5. In preferred embodiments, the polymerization reactors have an internal surface in contact with the slurry that has a surface roughness Rₐ of less than 5 µm, preferably less than 3 µm, and in particular less than 1.5 µm determined according to ASME B46.1.

The agitator of the reactor system of the present disclosure can induce a flow of the reactor content and allows to mix the reactor content. In preferred embodiments, the agitator is arranged centrally in the reactor and preferably comprises a motor located on the top reactor head, a rotating shaft which is extending along the reactor's central axis and one or more stages of agitator blades. Preferably, there are 2 to 6 stages of agitator blades attached to the rotating shaft. More preferably, there are 4 or 5 stages of agitator blades. A stage of agitator blades usually comprises several agitator blades. Preferred stages of agitator blades comprise from 2 to 4 blades.

In preferred embodiments, the motor rotates the agitator shaft and the attached agitator blades. The rotation of the blades induces primarily a vertical flow of the reactor content in a circular cross-section around the agitator shaft. This vertical flow of the reactor content is preferably a downward flow. At the bottom head, this flow changes direction, and flows first outward toward the reactor wall and then back upward to the top, changes direction again and then back to the center of the polymerization reactor. The rotation of the agitator also results in a secondary flow pattern of the reactor content in the reactor. This secondary flow is a circular flow in the direction of rotation of the agitator. To control this circular flow, the polymerization reactor is preferably equipped with one or more baffles.

The reactor system of the process of the present disclosure supports the slurry polymerization of ethylene and optionally one or more comonomers and comprises a polymerization reactor and one or more first heat exchangers located outside the polymerization reactor.

The reactor system for carrying out the process of the present disclosure comprises one or more first heat exchangers located outside the polymerization reactor for cooling or heating the reactor content. During polymerization, the heat of polymerization is removed from the polymerization reactor by withdrawing slurry from the polymerization reactor, cooling the slurry in the one or more first heat exchangers and returning the cooled slurry to the polymerization reactor. The one or more first heat exchangers can be any of those normally employed for the fluids described herein at the temperature and pressures involved, e.g., the heat exchangers can be selected from double pipe, shell & tube, plate, plate & shell and spiral heat exchangers.

Preferably, the first heat exchangers are double pipe heat exchangers. Such are basically long, jacketed pipes, which are usually from about 100 m to 600 m long. The inner diameter of the pipes is usually in the range of from about 150 mm to 400 mm. Preferably, the double pipe heat exchangers are composed of individual jacketed segments. These segments are preferably flanged together, either directly or separated by a bend. Preferred bends are 180° bend bends. Preferably, the straight individual segments have a length of from 6 m to 12 m. Each double pipe heat exchangers is preferably composed of from 4 to 50, more preferably from 5 to 40 and in particular from 10 to 35 individual jacketed segments The flows of the reactor content and the flows of the tempering medium through the jackets of the double pipe heat exchangers may be co-current, counter-current or a combination of co-current/counter-current. Preferably, the flows in the first heat exchangers are a combination of co-current/counter-current.

In preferred embodiments of the present disclosure, the first heat exchangers are double pipe heat exchangers which have an internal surface in contact with the slurry that has a surface roughness Rₐ of less than 5 µm, preferably less than 3 µm, and in particular less than 1.5 µm determined according to ASME B46.1. Designing the double pipe heat exchangers with an internal surface having a surface roughness Rₐ of less than 5 µm minimizes the build-up of wall layers. The surface roughness Rₐ as defined in the present disclosure can, for example be realized by polishing, such as mechanical polishing or electropolishing.

It is possible that the reactor system has one first heat exchanger located outside the polymerization reactor. However, the reactor system may also have two, three, four or more first heat exchangers located outside the polymerization reactor. Preferably the reactor system has two or three first heat exchangers.

The reactor system for carrying out the process of the present disclosure further comprises one or more circulation pumps for withdrawing the reactor content from the polymerization reactor and circulating the reactor content through the one or more first heat exchangers. The tempering medium is preferably circulated by means of circulation pumps which provide a substantially constant flow rate of the tempering medium at the outlets of the circulation pumps. The one or more circulation pumps are preferably arranged upstream of the one or more first heat exchangers, i.e. between the outlet of the polymerization reactor where the withdrawn reactor content leaves the polymerization reactor and the one or more first heat exchangers. Preferred circulation pumps are centrifugal pumps having an semi-open impeller made from electro-polished stainless steel.

In the process of the present disclosure, the tempering medium for cooling or heating the one or more first heat exchangers is circulated in a closed loop. If the reactor system comprises more than one first heat exchangers, preferably all first heat exchangers of the reactor system are operated in parallel in one closed loop of the circulating tempering medium. The one or more first heat exchangers located outside the polymerization reactor serve as well for cooling the content of the polymerization reactor as for heating the content of the polymerization reactor. Depending on the function, the first heat exchangers have accordingly to be provided with a cooling medium when cooling the content of the polymerization reactor or the first heat exchangers have to be provided with a heating medium when heating the content of the polymerization reactor. In the process of the present disclosure, both tasks are performed by a tempering medium which serves for cooling the one or more first heat exchangers and which serves for heating the one or more first heat exchangers. The closed loop of the tempering medium is equipped with two further heat exchangers, a second heat exchanger for cooling the tempering medium and a third heat exchangers for heating the tempering medium.

Cooling the tempering medium, i.e. using the tempering medium as coolant, takes place during the polymerization of ethylene or the copolymerization of ethylene and one or more C₃-C₁₂-1-alkenes in the polymerization reactor for removing the heat of polymerization. The second heat exchanger for cooling the tempering medium is cooled by a coolant which is preferably water. The coolant is provided through a coolant feed line, passed through the second heat exchanger and is then withdrawn through a coolant exit line. Preferably, the second heat exchanger for cooling the tempering medium is a plate heat exchanger. In preferred embodiments of the present disclosure, the second heat exchanger is dived in a multitude of plate heat exchangers operating in parallel, for example a battery of two, three, four, five, six, seven, eight, nine or ten plate heat exchangers operating in parallel. In other preferred embodiments, the second heat exchanger for cooling the tempering medium is a cooling tower such as for example an atmospheric cooling tower.

During polymerization, the temperature of the circulated tempering medium can be maintained by adjusting the flow rate of the coolant through the second heat exchanger by means of a control valve located in the coolant feed line or preferably in the coolant exit line. In preferred embodiments, the controlling of the temperature of the circulated tempering medium occurs by splitting the stream of the tempering medium conveyed to the second heat exchanger into two portions. One portion passes the second heat exchanger for being cooled by the coolant, while the second portion bypasses the second heat exchanger and directly returns to the inlet side of the circulation pump circulating the tempering medium. The flow rate of the tempering medium through the bypass is preferably adjusted by a control valve located in the bypass line. Varying the opening of the control valve varies the ratio of the portion of the tempering medium running through the second heat exchanger to the portion bypassing the second heat exchanger and accordingly varies the temperature of the combined tempering medium after bringing these two portions together again.

Heating the tempering medium, i.e. using the tempering medium as heating medium for the content of the polymerization reactor, takes place, for example, in the start-up of the polymerization or during cleaning of the reactor system. The third heat exchanger for heating the tempering medium is heated by a heating medium which is preferably steam. The heating medium is then provided through a heating medium feed line, passed through the third heat exchanger and is then withdrawn through a heating medium exit line. Preferably, the third heat exchanger for heating the tempering medium is a shell and tube heat exchanger.

When carrying out the process for the preparation of ethylene polymers as multi-reactor polymerization in a combination of two, three or more reactor systems, it is especially preferred that all first heat exchangers are cooled or heated by a tempering medium which is circulated in one closed loop system and all first heat exchangers are operated in parallel in the closed loop of the circulating tempering medium which is cooled by one second heat exchanger.

According to preferred embodiments of the present disclosure, the slurry in the polymerization reactor is not only cooled or heated in one or more first heat exchangers located outside the polymerization reactor but also by a tempering jacket at the outside of the polymerization reactor. Preferably, the tempering jacket is also tempered by the tempering medium cooling or heating the one or more first heat exchangers used for cooling or heating the reactor content. The tempering jacket preferably consists of a series of half-pipes attached to the outside of the polymerization reactor. It is further preferred that the first heat exchangers and the tempering jacket at the outside of the polymerization reactor are operated in parallel in the closed loop of the circulating tempering medium. When carrying out the process for the preparation of ethylene polymers as multi-reactor polymerization in a combination of two, three or more reactor systems, preferably each of the reactor reactors is equipped at the reactor outside with a tempering jacket. It is especially preferred that all first heat exchangers and all cooling jackets are operated in parallel in the closed loop of the circulating tempering medium.

During the polymerization of ethylene or the copolymerization of ethylene and the one or more C₃-C₁₂-1-alkenes, the polymerization reactor is filled with a slurry of ethylene polymer particles in a liquid medium comprising a hydrocarbon diluent; and the slurry is cooled by withdrawing slurry from the polymerization reactor, cooling the slurry in the one or more first heat exchangers and returning the cooled slurry to the polymerization reactor.

According to the process of the present disclosure, during the polymerization of ethylene or the copolymerization of ethylene and the one or more C₃-C₁₂-1-alkenes, the temperature of the tempering medium cooling the one or more first heat exchangers is in the range from 20°C to 50°C, preferably from 25°C to 45°C, and more preferably from 29°C to 40°C, and the tempering medium is cooled in the second heat exchanger by a coolant having a temperature from -20° to 45°C, preferably from 15°C to 40°C, and more preferably from 20°C to 36°C.

In preferred embodiments of the process of the present disclosure, the process for polymerizing ethylene or copolymerizing ethylene and one or more C₃-C₁₂-1-alkenes comprises a cleaning step for cleaning the polymerization reactor, for cleaning the one or more first heat exchangers or for cleaning the polymerization reactor and the one or more first heat exchangers. The cleaning step preferably comprises the sub-steps of terminating the polymerization, introducing a hydrocarbon solvent into reactor system thereby forming a cleaning fill, heating the cleaning fill and circulating the cleaning fill within the reactor system with operating the agitator within the polymerization reactor, discharging the cleaning fill from the reactor system and resuming the polymerization of ethylene or copolymerization of ethylene and one or more C₃-C₁₂-1 alkenes in the reactor system.

The termination of the polymerization of ethylene or the copolymerization of ethylene and one or more C₃-C₁₂-1-alkenes in the reactor system preferably occurs by terminating all feed streams to the reactor system or the combination of double pipe reactor systems while preferably continuing with the operation of the circulation pumps or the circulation pumps. Terminating the feed streams means that no longer ethylene, comonomer, catalyst, hydrogen and hydrocarbon diluent are fed to the reactor system. Thereafter, the slurry of ethylene polymer particles in the liquid medium is discharged from the reactor system until the reactor system is empty. A preferred method for discharging a slurry of ethylene polymer particles in a liquid medium from a multi-reactor slurry polymerization system is for example disclosed in WO 2018/127472 A1.

After emptying the reactor system from the slurry, the reactor system is preferably flushed with a hydrocarbon for removing ethylene polymer particles which may remain in the reactor system after the slurry has been discharged. The hydrocarbon for flushing the reactor system is preferably the hydrocarbon used as diluent in the polymerization. In preferred embodiments, the hydrocarbon for removing remaining ethylene polymer particles is introduced into the reactor system and then circulated by the one or more circulation pumps through the one or more first heat exchangers, e.g. for from 10 min to 3 hours. Thereafter, the agitator of the polymerization reactor is preferably stopped and the circulation pumps are operated for from 1 hour to 12 hours, more preferably for from 1.5 hours to 8 hours and in particular for from 2 hours to 4 hours. Subsequently, the circulation pumps are preferably stopped and the content of the reactor is discharged, preferably through a bottom outlet of the polymerization reactor. In preferred embodiments, the agitator of the polymerization reactor is restarted while still a part of the hydrocarbon used for flushing the reactor system is left in the polymerization reactor. Preferably, at least the bottom part of the polymerization reactor is flushed a second time with hydrocarbon for removing still remaining ethylene polymer particles.

For cleaning the reactor system, a hydrocarbon solvent is introduced into the emptied reactor system thereby forming a cleaning fill within the reactor system. The hydrocarbon solvent for cleaning the reactor system is preferably the hydrocarbon diluent used in the polymerization. The hydrocarbon solvent is preferably introduced into the emptied reactor system until a liquid level of the cleaning fill within the polymerization reactor is reached which is at least as high as the liquid level of the slurry within the polymerization reactor during polymerization. In preferred embodiments, the reactor system is completely filled with the hydrocarbon solvent.

Thereafter, the cleaning fill within the reactor system is preferably heated to a temperatures from 100°C to 180°C, preferably from 110°C to 170°C and more preferably from 120°C to 160°C, while the agitator within the polymerization reactor is operated. The heating occurs preferably by withdrawing parts of the cleaning fill from the polymerization reactor, heating the withdrawn parts of the cleaning fill in the one or more first heat exchangers and returning the heated parts of the cleaning fill to the polymerization reactor. The tempering medium is preferably heated in the third heat exchanger by providing the third heat exchanger with a heating medium having a temperature from 150°C to 250°C, preferably from 170°C to 230°C and more preferably from 180°C to 210°C The heating medium for heating the third heat exchanger is preferably steam having a pressure from 0.6 MPa to 1.5 MPa, more preferably having a pressure from 0.7 MPa to 1.1 MPa. In preferred embodiments, the cleaning fill is not only heated by passing parts of the cleaning fill through the heated one or more first heat exchangers but also by heating the tempering jacket at the outside of the polymerization reactor.

The heated cleaning fill is preferably maintained within the reactor system at the temperature from 100°C to 180°C, preferably from 110°C to 170°C and more preferably from 120°C to 160°C for from 4 hours to 120 hours, preferably from 10 hours to 80 hours and more preferably from 15 hours to 50 hours with continued circulation of the cleaning fill through the one or more first heat exchangers and continued operation of the agitator.

Preferably, the cleaning fill is subsequently discharged from the reactor system until the reactor system is empty. Thereafter, the polymerization of ethylene or the copolymerization of ethylene and one or more C₃-C₁₂-1 alkenes is resumed in the reactor system.

The contents of the polymerization reactor and of the one or more first heat exchangers may be discharged together through one outlet of the reactor system. Preferably, the content of the polymerization reactor and the contents of the one or more first heat exchangers are discharged separately through two or more outlets of the reactor system. In preferred embodiments, the circulation of the cleaning fill from the polymerization reactor through the one or more first heat exchangers is terminated and the contents of the one or more first heat exchangers and of the polymerization reactor are subsequently discharged through two or more outlets of the reactor system.

In preferred embodiments of the process of the present disclosure, the introduction of the hydrocarbon solvent into the reactor system is terminated after a cleaning fill within the reactor system has been formed, and thereafter the maintenance of the cleaning fill within the reactor system at the temperature from 100°C to 180°C and the discharge of the cleaning fill from the reactor system occur without introduction of additional hydrocarbon solvent.

In other preferred embodiments of the process of the present disclosure, the introduction of the hydrocarbon solvent into the reactor system is not terminated after a cleaning fill within the reactor system has been formed and the liquid level of the cleaning fill within the polymerization reactor is maintained by discharging cleaning fill from the reactor system. Continuously introducing hydrocarbon solvent and continuously withdrawing cleaning fill from the reactor system provides that a viscosity increases of the cleaning fill within the reactor system by the dissolution of the oligomeric or polymeric walls layers is less pronounced and that a saturation of the cleaning fill with dissolved walls layers does not take place or at least is reached later.

In preferred embodiments of the present disclosure, the cleaning fill which is discharged from the reactor system is transferred into an agitated evaporation vessel which is configured to allow withdrawal of hydrocarbon solvent by evaporation from a liquid medium comprising such hydrocarbon solvent. The discharge of the cleaning fill from the reactor system into the agitated distillation vessel occurs preferably by a pressure difference between the cleaning fill within the reactor system and the agitated distillation vessel. In preferred embodiments of the present disclosure, the depressurization of the hot cleaning fill occurs while entering the evaporation vessel resulting in a considerable temperature drop combined with an evaporation of a significant amount of hydrocarbon.

Preferably, the evaporation vessel is first filled with cleaning fill discharged from the reactor system and thereafter the evaporation of the hydrocarbon solvent is started. The evaporation is preferably continued until a concentrated mixture of the previously solved oligomeric and polymeric materials and remaining hydrocarbon solvent is formed. Usually at least a part of the previously solved oligomeric and polymeric materials has precipitated. After discharging the remaining concentrated mixture, the evaporation vessel can be filled again with cleaning fill discharged from the reactor system. In preferred embodiments, cleaning fill discharged from the reactor system, which can no longer be fed into the agitated evaporation vessel because the evaporation vessel is completely filled, is fed into a second agitated evaporation vessel instead of interrupting the discharge until the agitated evaporation vessel is emptied again.

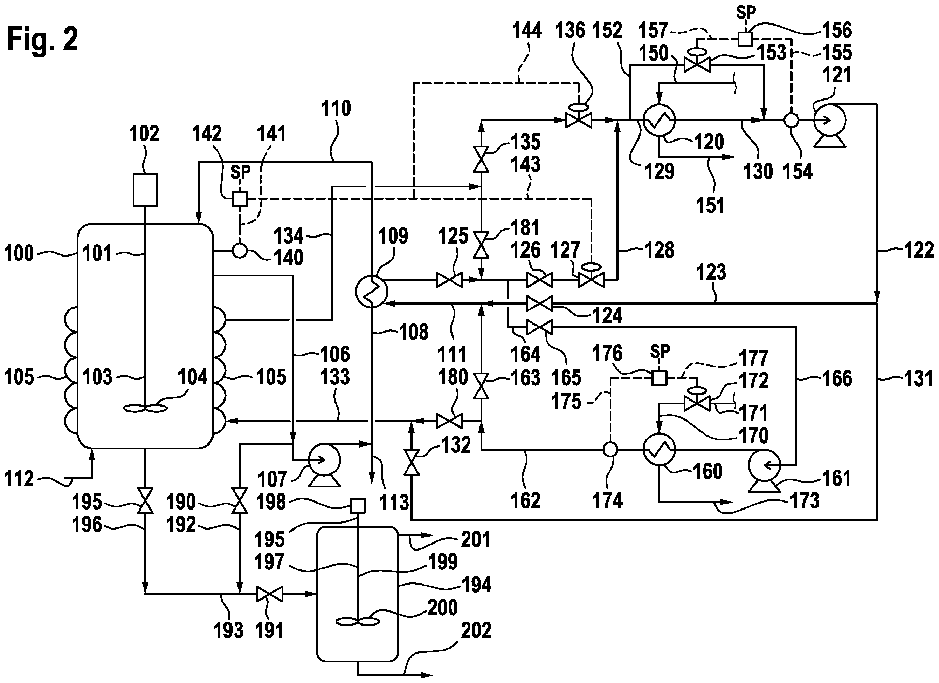

Figure 2 shows schematically a set-up of a reactor system for carrying out the process of the present disclosure for polymerizing ethylene or copolymerizing ethylene and one or more C₃-C₁₂-1-alkenes.

Polymerization reactor (100) includes an agitator (101) for agitating the contents of the reactor. The agitator (101) comprises a motor (102), a rotating shaft (103) which is substantially vertically installed centrally into reactor (100), and at least one impeller (104). The polymerization reactor (100) is equipped with a tempering jacket (105) on the outside surface of the reactor (100) through which a tempering medium flows. Reactor content is withdrawn from polymerization reactor (100) through line (106) to circulation pump (107), which then pumps the reactor content through line (108) to the first heat exchanger (109). The tempered reactor content which has passed the first heat exchanger (109) flows back to polymerization reactor (100) through line (110). The tempering medium for tempering the first heat exchanger (109) comes through line (111).

The components of the reaction mixture such as catalyst components, ethylene, possible comonomers, hydrogen and the hydrocarbon diluent are fed to the reactor via one or more feeding lines (112). During the polymerization of ethylene or the copolymerization of ethylene and one or more C₃-C₁₂-1-alkenes in polymerization reactor (100), slurry is withdrawn from polymerization reactor (100) and the first heat exchanger (109) operates as cooler. Slurry is further routed to a downstream reactor or to product recovery through line (113).

While polymerizing, valves (163), (165), (180) and (181) are closed. The cooled tempering medium for cooling the first heat exchanger (109) comes from the second heat exchanger (120). The cooled tempering medium leaving the second heat exchanger (120) through line (130) is circulated by a second circulation pump (121) through lines (122) and (123), valve (124) and line (111) to the first heat exchanger (109), and then through valves (125) and (126), control valve (127) and lines (128) and (129) back to the second heat exchanger (120).

While polymerizing, preferably also the tempering jacket (105) of the polymerization reactor (100) is cooled by the tempering medium. For cooling the tempering jacket (105), the second circulation pump (121) circulates the cooled tempering medium leaving the second heat exchanger (120) through line (130) through lines (122) and (131), valve (132) and line (133) to the tempering jacket (105), and then through line (134), valve (135), control valve (136) and line (129) back to the second heat exchanger (120).

To control the temperature of polymerization reactor (100), temperature transducer (140) produces a temperature signal (141) which is representative of the temperature of polymerization reactor (100). Temperature controller (142) receives the temperature signal (141) along with a setpoint (SP) which is representative of the desired temperature for the polymerization reactor (100). In response to temperature signal (141), temperature controller (142) provides output signals (143) and (144) which are responsive to the difference between temperature signal (141) and the setpoint for the reactor temperature. Control valves (127) and (136) which are controlling the flows of the tempering medium from the first heat exchanger (109) and the tempering jacket (105) to the second heat exchanger (120) are manipulated in response to signals (143) and (144).

The tempering medium is cooled in the second heat exchanger (120) using a coolant entering the second heat exchanger (120) through line (150) and leaving the second heat exchanger (120) through line (151). To control the temperature of the tempering medium cooling the first heat exchanger (109), a part of the tempering medium conveyed through line (129) does not pass the second heat exchanger (120) but bypasses the second heat exchanger (120) through line (152). The flow of the tempering medium bypassing the second heat exchanger (120) is adjusted by control valve (153). Temperature transducer (154) produces a temperature signal (155), which is representative of the temperature of the combined tempering medium after merging the part of the tempering medium passing the second heat exchanger (120) and the part of the tempering medium bypassing the second heat exchanger (120) through line (152). Temperature controller (156) receives the temperature signal (155) along with a setpoint (SP) which is representative of the desired temperature for the tempering medium entering the second circulation pump (121). In response to temperature signal (155), temperature controller (156) provides output signal (157) which is responsive to the difference between temperature signal (155) and the setpoint for the temperature of the tempering medium flowing in line (130). Control valve (153) is manipulated in response to signal (157).

For cleaning the polymerization reactor, for cleaning the one or more first heat exchangers or for cleaning the polymerization reactor and the one or more first heat exchangers, the first heat exchanger (109) is operated as heater for heating the parts of the reactor content which are withdrawn from the polymerization reactor (100) and circulated through the first heat exchanger (109).

For heating the content of the polymerization reactor (100), valves (124), (126), (132) and (135) are closed and the tempering medium for heating the first heat exchanger (109) comes from the third heat exchanger (160). The tempering medium is circulated by a third circulation pump (161) through the third heat exchanger (160), line (162), valve (163) and line (111) to the first heat exchanger (109), and then through valve (125), line (164), valve (165) and line (166) back to the third circulation pump (161).

The tempering medium is heated in the third heat exchanger (160), preferably using medium pressure steam entering the third heat exchanger (160) through line (170). The medium pressure steam comes through line (171) to control valve (172) which adjusts the flow of the medium pressure steam. The medium pressure steam then flows through line (170) into the third heat exchanger (160), through the third heat exchanger (160), and then exits the third heat exchanger (160) through line (173). To control the temperature of the tempering medium heating the first heat exchanger (109), temperature transducer (174) produces a temperature signal (175), which is representative of the temperature of the tempering medium leaving the third heat exchanger (160) through line (162). Temperature controller (176) receives the temperature signal (175) along with a setpoint (SP) which is representative of the desired temperature for the tempering medium flowing in line (162). In response to temperature signal (175), temperature controller (176) provides output signal (177) which is responsive to the difference between temperature signal (175) and the setpoint for the temperature of the tempering medium flowing in line (162). Control valve (172) is manipulated in response to signal (177).

It is further possible to also heat the tempering jacket (105) using the tempering medium. The tempering medium is then circulated by the third circulation pump (161) through the third heat exchanger (160), line (162), valve (180) and line (133) to the tempering jacket (105), and then through line (133), valve (181), line (164), valve (165) and line (166) back to the third circulation pump (161).

After cleaning the reactor system, operation of the circulation pumps (107) and (161) is stopped, the valves (190) and (191) are opened and the content of the first heat exchanger (109) is discharged through line (108), circulation pump (107), valve (190), lines (192) and (193), and valve (191) into evaporation vessel (194). Once the first heat exchanger (109) is empty, valve (190) is closed and valve (195) is opened and the content of the polymerization reactor (100) is discharged through valve (195), lines (196) and (193), and valve (191) into evaporation vessel (194).

The evaporation vessel (194) includes an agitator (197) for agitating the contents of the reactor. The agitator (197) comprises a motor (198), a rotating shaft (199) which is substantially vertically installed centrally into the evaporation vessel (194), and at least one impeller (200). During evaporation, evaporated hydrocarbon solvent is withdrawn through line (201) to the off-gas system (not shown). After the evaporation, a concentrated mixture of previously solved oligomeric and polymeric materials and remaining hydrocarbon solvent is withdrawn through line (202) and discarded.

The process of the present disclosure allows to clean the reactor system with hot hydrocarbons in a fast and economical manner, in particular permitting a fast transition from cooling the first heat exchangers and tempering jackets to heating the first heat exchangers and tempering jackets, and vice versa. The process is easy to control and it is not needed to replace defective external heat exchangers or polymerization reactor tempering jackets from time to time. The process nonetheless allows to prepare the ethylene polymers with the targeted combination of polymer properties without operational problems.

### EXAMPLES

### Comparative Example A

Ethylene polymers were continuously prepared in a commercially operated series of three reactor systems comprising each a polymerization reactor as shown in Figure 1. Each of the polymerization reactors were part of a reactor system further comprising two parallel first heat exchangers located outside the polymerization reactor for removing the heat of polymerization. All first heat exchangers were composed of straight jacketed segments having each a length of 12 m which segments were flanged together. The polymerization reactors were further equipped with tempering jackets. The first heat exchangers and the tempering jackets of the polymerization reactors were all cooled by a coolant which circulated in a closed loop and the coolant was cooled in a second heat exchanger. For a period of more than five years, polymerizations of ethylene and 1-butene as comonomer were carried out in slurry in the presence of Ziegler-type catalysts at reactor temperatures in the range from 65°C to 85°C and reactor pressures from 0.2 MPa to 1.3 MPa preparing a variety of different polyethylene grades. Depending on the grades, the production rate varied in the range from 30 to 41 t/h.

During this period of time, a decrease of the heat transfer in the heat exchanger was regularly observed, caused by build-up of walls layers within the first heat exchangers. To remove the walls layers within the first heat exchangers, the reactor system was cleaned with hot hydrocarbons in average twice a year. For heating the reactor contents during the cleaning, the first heat exchangers and the tempering jackets were separated from the closed loop of circulating coolant and connected with a supply of saturated steam having a pressure of 0.8 MPa. Each cleaning of the first heat exchangers and the tempering jackets of the polymerization reactors took 5 days from the termination of the polymerization to the resumption of the polymerization after the reactor system had been cleaned.

At the end of the five years period, an inspection of the first heat exchangers took place and about 20% of the straight segments of the first heat exchangers were so heavily corroded that it was needed to replace the segments because a leakage of coolant could not be excluded for the next future.

### Example 1

Ethylene polymers were continuously prepared in a commercially operated series of three reactor systems comprising each a polymerization reactor as shown in Figure 1. Each of the polymerization reactors were part of a reactor system as shown in Figure 2, however comprising two parallel first heat exchangers located outside the polymerization reactor instead of one as shown in Figure 2 for removing the heat of polymerization. All first heat exchangers were composed of straight jacketed segments having each a length of 12 m which segments were flanged together. The polymerization reactors were further equipped with tempering jackets. The first heat exchangers and the tempering jackets of the polymerization reactors were all cooled by a tempering medium which circulated in a closed loop. During polymerization, the tempering medium was cooled in a second heat exchanger. For a period of more than five years, polymerizations of ethylene and 1-butene as comonomer were carried out in slurry in the presence of Ziegler-type catalysts at reactor temperatures in the range from 65°C to 85°C and reactor pressures from 0.2 MPa to 1.3 MPa preparing a variety of different polyethylene grades. Depending on the grades, the production rate varied in the range from 30 to 41 t/h.

During this period of time, a decrease of the heat transfer in the heat exchanger was regularly observed, caused by a build-up of walls layers within the first heat exchangers. To remove the walls layers within the first heat exchangers, the reactor system was cleaned with hot hydrocarbons in average twice a year. For heating the reactor contents, the closed loop of circulating tempering medium was equipped with a third heat exchanger that was connected with a supply of saturated steam having a pressure of 0.9 MPa. Each cleaning of the first heat exchangers and the tempering jackets of the polymerization reactors took 3 days from the termination of the polymerization to the resumption of the polymerization after the reactor system had been cleaned.

At the end of the five years period, an inspection of the first heat exchangers took place. None of the straight segments of the first heat exchangers were so heavily corroded that it was needed to replace the segments.

## Claims

1. A process for polymerizing ethylene or copolymerizing ethylene and one or more C₃-C₁₂-1-alkenes in a slurry polymerization at temperatures of from 40 to 150°C and pressures from 0.1 to 5 MPa in the presence of a polymerization catalyst,
wherein the process is carried out in a reactor system comprising
- a polymerization reactor configured to have a content in liquid form;
- an agitator for agitating the reactor content;
- one or more first heat exchangers located outside the polymerization reactor for cooling or heating the reactor content;
- one or more circulation pumps for withdrawing the reactor content from the polymerization reactor and circulating the reactor content through the one or more first heat exchangers; and
- a closed loop of a tempering medium for cooling or heating the one or more first heat exchangers, which closed loop is equipped with a second heat exchangers for cooling the tempering medium and is equipped with a third heat exchangers for heating the tempering medium, and
wherein, during the polymerization of ethylene or copolymerizing ethylene and the one or more C₃-C₁₂-1-alkenes,
- the polymerization reactor is filled with a slurry of ethylene polymer particles in a liquid medium comprising a hydrocarbon diluent;
- the slurry is cooled by withdrawing slurry from the polymerization reactor, cooling the slurry in the one or more first heat exchangers and returning the cooled slurry to the polymerization reactor;
- the temperature of the tempering medium cooling the one or more first heat exchangers is in the range from 20°C to 50°C; and
- the tempering medium is cooled in the second heat exchanger by a coolant having a temperature from -20° to 45°C.

2. The process of claim 1, wherein the reactor system is a part of a series of two, three or more reactor systems comprising each a polymerization reactor and one or more first heat exchangers located outside the polymerization reactor for cooling or heating the reactor content.

3. The process of claim 1 or 2, wherein the first heat exchangers are double pipe heat exchangers, preferably having a surface roughness Rₐ of less than 5 µm determined according to ASME B46.1.

4. The process of any of claims 1 to 3, wherein the polymerization reactors are further equipped at the reactor outside with tempering jackets.

5. The process of claim 4, wherein the tempering jackets consist of a series of half-pipes attached to the outside of the polymerization reactors.

6. The process of claim 4 or 5, wherein the tempering medium for cooling or heating the tempering jacket is the tempering medium for cooling or heating the one or more first heat exchangers.

7. The process of any of claims 1 to 6 comprising a cleaning step for cleaning the polymerization reactor, for cleaning the one or more first heat exchangers or for cleaning the polymerization reactor and the one or more first heat exchangers, wherein the cleaning step comprises the sub-steps of
terminating the polymerization of ethylene or the copolymerization of ethylene and one or more C₃-C₁₂-1-alkenes in the reactor system and discharging the slurry of ethylene polymer particles from the reactor system until the reactor system is empty;
introducing a hydrocarbon solvent into the emptied reactor system thereby forming a cleaning fill within the reactor system;
heating the cleaning fill within the reactor system to a temperatures from 100 to 180°C, wherein
- the agitator within the polymerization reactor is operated;
- the cleaning fill is heated by withdrawing parts of the cleaning fill from the polymerization reactor, heating the parts of the cleaning fill in the one or more first heat exchangers and returning the heated parts of the cleaning fill to the polymerization reactor; and
- the tempering medium is heated in the third heat exchanger by providing the third heat exchanger with a heating medium having a temperature from 150°C to 250°C;
maintaining the cleaning fill within the reactor system at the temperature from 100°C to 180°C for from 4 to 120 hours with continued circulation of the cleaning fill through the one or more first heat exchangers and continued operation of the agitator;
discharging the cleaning fill from the reactor system until the reactor system is empty; and
resuming polymerizing ethylene or copolymerizing ethylene and one or more C₃-C₁₂-1 alkenes in the reactor system.

8. The process of claim 7, wherein after discharging the slurry of ethylene polymer particles from the reactor system and before introducing the cleaning fill into the reactor system a sub-step of flushing the reactor system with hydrocarbon diluent is carried out.

9. The process of claim 7 or 8, wherein the hydrocarbon solvent is introduced into the emptied reactor system until a liquid level of the cleaning fill within the polymerization reactor is at least as high as the liquid level of the slurry within the polymerization reactor during polymerization.

10. The process of any of claims 7 to 9, wherein the introduction of the hydrocarbon solvent into the reactor system is terminated after a cleaning fill within the reactor system has been formed and thereafter the maintenance of the cleaning fill within the reactor system at the temperature from 100°C to 180°C and the discharge of the cleaning fill from the reactor system occur without introduction of additional hydrocarbon solvent.

11. The process of any of claims 7 to 9, wherein, during the maintenance of the cleaning fill within the reactor system at a temperature from 100°C to 180°C, hydrocarbon solvent is continuously introduced into the reactor system and cleaning fill is continuously discharged from the reactor system.

12. The process of any of claims 7 to 11, wherein for emptying the reactor system before resuming the polymerization, the circulation of the cleaning fill from the polymerization reactor through the one or more first heat exchangers is terminated and the contents of the one or more first heat exchangers and the polymerization reactor are subsequently discharged.

13. The process of any of claims 7 to 12, wherein the cleaning fill discharged from the reactor system is transferred into an agitated evaporation vessel which is configured to allow withdrawal of hydrocarbon solvent by evaporation from a liquid medium comprising such hydrocarbon solvent.

14. The process of claim 13, wherein the discharge of the cleaning fill from the reactor system into the agitated distillation vessel occurs by a pressure difference between the cleaning fill within the reactor system and the agitated distillation vessel.

15. The process of any of claims 2 to 14, wherein the obtained ethylene polymers are bimodal or multimodal ethylene polymers.

## Patentansprüche

1. Verfahren zum Polymerisieren von Ethylen oder Copolymerisieren von Ethylen und einem oder mehreren C₃- bis C₁₂-1-Alkenen in einer Aufschlämmungspolymerisation bei Temperaturen von 40 bis 150 °C und Drücken von 0,1 bis 5 MPa in Gegenwart eines Polymerisationskatalysators,
wobei das Verfahren in einem Reaktorsystem durchgeführt wird, welches folgendes umfasst:
- einen Polymerisationsreaktor, der ausgestaltet ist, um einen Inhalt in flüssiger Form zu haben;
- einen Mischer zum Mischen des Reaktorinhalts;
- einen oder mehrere erste Wärmetauscher, die sich außerhalb des Polymerisationsreaktors befinden, um den Reaktorinhalt zu kühlen oder zu heizen;
- eine oder mehrere Zirkulationspumpen zum Abziehen des Reaktorinhalts von dem Polymerisationsreaktor und Zirkulieren des Reaktorinhalts durch den einen oder die mehreren ersten Wärmetauscher; und
- eine geschlossene Schleife eines Temperiermediums zum Kühlen oder Heizen des einen oder der mehreren ersten Wärmetauscher, wobei die geschlossene Schleife mit einem oder mehreren zweiten Wärmetauschern zum Kühlen des Temperiermediums ausgestattet ist und mit einem oder mehreren dritten Wärmetauschern zum Heizen des Temperiermediums ausgestattet ist, und
wobei während der Polymerisation von Ethylen oder des Copolymerisierens von Ethylen und dem einen oder mehreren C₃- bis C₁₂-1-Alkenen
- der Polymerisationsreaktor mit einer Aufschlämmung von Ethylenpolymerpartikeln in einem flüssigen Medium, das ein Kohlenwasserstoffverdünnungsmittel umfasst, gefüllt wird;
- die Aufschlämmung gekühlt wird, indem Aufschlämmung aus dem Polymerisationsreaktor abgezogen wird, die Aufschlämmung in dem einen oder den mehreren ersten Wärmetauschern gekühlt wird und die gekühlte Aufschlämmung in den Polymerisationsreaktor zurückgegeben wird;
- die Temperatur des Temperiermediums, welches den einen oder die mehreren ersten Wärmetauscher kühlt, im Bereich von 20 °C bis 50 °C liegt; und
- das Temperiermedium in dem zweiten Wärmetauscher durch ein Kühlmittel mit einer Temperatur von -20 °C bis 45 °C gekühlt wird.

2. Verfahren nach Anspruch 1, wobei das Reaktorsystem Teil einer Reihe von zwei, drei oder mehr Reaktorsystemen ist, die jeweils einen Polymerisationsreaktor und einen oder mehrere erste Wärmetauscher umfasst, die sich außerhalb des Polymerisationsreaktors befinden, um den Reaktorinhalt zu kühlen oder zu heizen.

3. Verfahren nach Anspruch 1 oder 2, wobei die ersten Wärmetauscher Doppelrohrwärmetauscher sind, vorzugsweise mit einer Oberflächenrauheit Rₐ von weniger als 5 µm, bestimmt gemäß ASME B46.1.

4. Verfahren nach einem der Ansprüche 1 bis 3, wobei die Polymerisationsreaktoren des Weiteren an der Reaktoraußenseite mit Temperiermänteln ausgerüstet sind.

5. Verfahren nach Anspruch 4, wobei die Temperiermäntel aus einer Reihe von Halbrohren bestehen, die an der Außenseite der Polymerisationsreaktoren befestigt sind.

6. Verfahren nach Anspruch 4 oder 5, wobei das Temperiermedium zum Kühlen oder Heizen des Temperiermantels das Temperiermedium zum Kühlen oder Heizen des einen oder der mehreren ersten Wärmetauscher ist.

7. Verfahren nach einem der Ansprüche 1 bis 6, umfassend einen Reinigungsschritt zum Reinigen des Polymerisationsreaktors, zum Reinigen des einen oder der mehreren ersten Wärmetauscher oder zum Reinigen des Polymerisationsreaktors und des einen oder der mehreren ersten Wärmetauscher, wobei der Reinigungsschritt die Teilschritte umfasst:
Beenden der Polymerisation von Ethylen oder der Copolymerisation von Ethylen und einem oder mehreren C₃- bis C₁₂-1-Alkenen in dem Reaktorsystem und Austragen der Aufschlämmung von Ethylenpolymerpartikeln aus dem Reaktorsystem, bis das Reaktorsystem leer ist;
Einbringen eines Kohlenwasserstofflösungsmittels in den geleerten Reaktor, wodurch eine Reinigungsfüllung in dem Reaktorsystem gebildet wird;
Heizen der Reinigungsfüllung innerhalb des Reaktorsystems auf eine Temperatur von 100 bis 180 °C, wobei
- der Mischer innerhalb des Polymerisationsreaktors betrieben wird;
- die Reinigungsfüllung erhitzt wird, indem Teile der Reinigungsfüllung aus dem Polymerisationsreaktor abgezogen werden, die Teile der Reinigungsfüllung in dem einen oder den mehreren ersten Wärmetauschern erhitzt werden und die erhitzten Teile der Reinigungsfüllung in den Polymerisationsreaktor zurückgegeben werden; und
- das Temperiermedium in dem dritten Wärmetauscher erhitzt wird, indem der dritte Wärmetauscher mit einem Heizmedium ausgestattet wird, das eine Temperatur von 150 °C bis 250 °C hat;
Halten der Reinigungsfüllung innerhalb des Reaktorsystems auf der Temperatur von 100 °C bis 180 °C für 4 bis 120 Stunden mit fortgesetzter Zirkulation der Reinigungsfüllung durch den einen oder die mehreren ersten Wärmetauscher und fortgesetztem Betrieb des Mischers;
Austragen der Reinigungsfüllung aus dem Reaktorsystem, bis das Reaktorsystem leer ist; und
Wiederaufnehmen der Polymerisation von Ethylen oder des Copolymerisierens von Ethylen und dem einen oder mehreren C₃- bis C₁₂-1-Alkenen in dem Reaktorsystem.

8. Verfahren nach Anspruch 7, wobei nach dem Austragen der Aufschlämmung der Ethylenpolymerpartikel aus dem Reaktorsystem und vor dem Einbringen der Reinigungsfüllung in das Reaktorsystem ein Teilschritt des Spülens des Reaktorsystems mit Kohlenwasserstoffverdünnungsmittel durchgeführt wird.

9. Verfahren nach Anspruch 7 oder 8, wobei das Kohlenwasserstofflösungsmittel in das geleerte Reaktorsystem eingebracht wird, bis ein Flüssigkeitsniveau der Reinigungsfüllung innerhalb des Polymerisationsreaktors mindestens so hoch wie das Flüssigkeitsniveau der Aufschlämmung innerhalb des Polymerisationsreaktors während der Polymerisation ist.

10. Verfahren nach einem der Ansprüche 7 bis 9, wobei die Einbringung des Kohlenwasserstofflösungsmittels in das Reaktorsystem beendet wird, nachdem eine Reinigungsfüllung innerhalb des Reaktorsystems gebildet worden ist, und danach das Halten der Reinigungsfüllung innerhalb des Reaktorsystems auf der Temperatur von 100 °C bis 180 °C und das Austragen der Reinigungsfüllung aus dem Reaktorsystem ohne Einbringung von zusätzlichem Kohlenwasserstofflösungsmittel erfolgen.

11. Verfahren nach einem der Ansprüche 7 bis 9, wobei während des Haltens der Reinigungsfüllung innerhalb des Reaktorsystems auf einer Temperatur von 100 °C bis 180 °C Kohlenwasserstofflösungsmittel kontinuierlich in das Reaktorsystem eingebracht wird und Reinigungsfüllung kontinuierlich aus dem Reaktorsystem ausgetragen wird.

12. Verfahren nach einem der Ansprüche 7 bis 11, wobei zum Leeren des Reaktorsystems vor der Wiederaufnahme der Polymerisation die Zirkulation der Reinigungsfüllung von dem Polymerisationsreaktor durch den einen oder die mehreren ersten Wärmetauscher beendet wird und die Inhalte des einen oder der mehreren ersten Wärmetauscher und der Polymerisationsreaktor nachfolgend ausgetragen werden.

13. Verfahren nach einem der Ansprüche 7 bis 12, wobei die aus dem Reaktorsystem ausgetragene Reinigungsfüllung in ein durchmischtes Verdampfungsgefäß überführt wird, das ausgestaltet ist, um Abziehen von Kohlenwasserstofflösungsmittel durch Verdampfen von einem flüssigen Medium, das solches Kohlenwasserstofflösungsmittel umfasst, zuzulassen.

14. Verfahren nach Anspruch 13, wobei das Austragen der Reinigungsfüllung aus dem Reaktorsystem in das durchmischte Destillationsgefäß unter einer Druckdifferenz zwischen der Reinigungsfüllung innerhalb des Reaktorsystems und dem durchmischten Destillationsgefäß erfolgt.

15. Verfahren nach einem der Ansprüche 2 bis 14, wobei die erhaltenen Ethylenpolymere bimodale oder multimodale Ethylenpolymere sind.

## Revendications

1. Procédé de polymérisation d'éthylène ou de copolymérisation d'éthylène et d'un ou de plusieurs 1-alcènes en C₃-C₁₂ dans une polymérisation en suspension à des températures de 40 à 150 °C et à des pressions de 0,1 à 5 MPa en présence d'un catalyseur de polymérisation,
le procédé étant mis en œuvre dans un système de réacteur comprenant
- un réacteur de polymérisation conçu pour présenter un contenu sous forme liquide ;
- un agitateur destiné à agiter le contenu du réacteur ;
- un ou plusieurs premiers échangeurs de chaleur situés à l'extérieur du réacteur de polymérisation et destinés à refroidir ou à chauffer le contenu du réacteur ;
- une ou plusieurs pompes de circulation destinées à soustraire le contenu du réacteur à partir du réacteur de polymérisation et à faire circuler le contenu du réacteur à travers ledit un ou lesdits plusieurs premiers échangeurs de chaleur ; et
- une boucle fermée d'un agent de thermorégulation destiné à refroidir ou à chauffer ledit un ou lesdits plusieurs premiers échangeurs de chaleur, laquelle boucle fermée est équipée d'un deuxième échangeur de chaleur destiné à refroidir l'agent de thermorégulation et équipée d'un troisième échangeur de chaleur destiné à chauffer l'agent de thermorégulation, et
dans lequel, lors de la polymérisation de l'éthylène ou de la copolymérisation de l'éthylène et dudit un ou desdits plusieurs 1-alcènes en C₃-C₁₂,
- le réacteur de polymérisation est rempli d'une suspension de particules de polymère d'éthylène dans un milieu liquide comprenant un diluant hydrocarboné ;
- la suspension est refroidie par soustraction de la suspension à partir du réacteur de polymérisation, refroidissement de la suspension dans ledit un ou lesdits plusieurs premiers échangeurs de chaleur et renvoi de la suspension refroidie au réacteur de polymérisation ;
- la température de l'agent de thermorégulation refroidissant ledit un ou lesdits plusieurs premiers échangeurs de chaleur est située dans la plage de 20 °C à 50 °C ; et
- l'agent de thermorégulation est refroidi dans le deuxième échangeur de chaleur par un fluide de refroidissement présentant une température de -20 ° à 45 °C.

2. Procédé selon la revendication 1, dans lequel le système de réacteur fait partie d'une série de deux ou trois systèmes de réacteur ou plus, comprenant chacun un réacteur de polymérisation et un ou plusieurs premiers échangeurs de chaleur situés à l'extérieur du réacteur de polymérisation et destinés à refroidir ou à chauffer le contenu du réacteur.

3. Procédé selon la revendication 1 ou 2, dans lequel les premiers échangeurs de chaleur sont des échangeurs de chaleur à double tuyau, présentant de préférence une rugosité de surface Rₐ inférieure à 5 µm, déterminée selon la norme ASME B46.1.

4. Procédé selon l'une quelconque des revendications 1 à 3, dans lequel les réacteurs de polymérisation sont en outre équipés à l'extérieur du réacteur par des chemises de thermorégulation.

5. Procédé selon la revendication 4, dans lequel les chemises de thermorégulation sont constituées d'une série de demi-tuyaux fixés à l'extérieur des réacteurs de polymérisation.

6. Procédé selon la revendication 4 ou 5, dans lequel l'agent de thermorégulation destiné à refroidir ou à chauffer la chemise de thermorégulation est l'agent de thermorégulation destiné à refroidir ou à chauffer ledit un ou lesdits plusieurs premiers échangeurs de chaleur.

7. Procédé selon l'une quelconque des revendications 1 à 6, comprenant une étape de nettoyage destinée à nettoyer le réacteur de polymérisation, à nettoyer ledit un ou lesdits plusieurs premiers échangeurs de chaleur ou à nettoyer le réacteur de polymérisation et ledit un ou lesdits plusieurs premiers échangeurs de chaleur, l'étape de nettoyage comprenant les sous-étapes de
arrêt de la polymérisation de l'éthylène ou de la copolymérisation de l'éthylène et d'un ou de plusieurs 1-alcènes en C₃-C₁₂ dans le système de réacteur et évacuation de la suspension de particules de polymère d'éthylène à partir du système de réacteur jusqu'à ce que le système de réacteur soit vide ;
introduction d'un solvant hydrocarboné dans le système de réacteur vidé, formant ainsi une charge de nettoyage à l'intérieur du système de réacteur ;
chauffage de la charge de nettoyage à l'intérieur du système de réacteur à une température de 100 à 180 °C,
- l'agitateur à l'intérieur du réacteur de polymérisation fonctionnant ;
- la charge de nettoyage étant chauffée par soustraction de parties de la charge de nettoyage à partir du réacteur de polymérisation, chauffage des parties de la charge de nettoyage dans ledit un ou lesdits plusieurs premiers échangeurs de chaleur et renvoi des parties chauffées de la charge de nettoyage au réacteur de polymérisation ; et
- l'agent de thermorégulation étant chauffé dans le troisième échangeur de chaleur par fourniture, au troisième échangeur de chaleur, d'un milieu chauffant présentant une température de 150 °C à 250 °C ;
maintien de la charge de nettoyage à l'intérieur du système de réacteur à la température de 100 °C à 180 °C pendant 4 à 120 heures avec une circulation continue de la charge de nettoyage à travers ledit un ou lesdits plusieurs premiers échangeurs de chaleur et un fonctionnement constant de l'agitateur ;
évacuation de la charge de nettoyage à partir du système de réacteur jusqu'à ce que le système de réacteur soit vide ; et
reprise de la polymérisation de l'éthylène ou de la copolymérisation de l'éthylène et d'un ou de plusieurs 1-alcènes en C₃-C₁₂ dans le système de réacteur.

8. Procédé selon la revendication 7, dans lequel, après l'évacuation de la suspension de particules de polymère d'éthylène à partir du système de réacteur et avant l'introduction de la charge de nettoyage dans le système de réacteur, une sous-étape de rinçage du système de réacteur à l'aide d'un diluant hydrocarboné est mise en œuvre.

9. Procédé selon la revendication 7 ou 8, dans lequel le solvant hydrocarboné est introduit dans le système de réacteur vidé jusqu'à ce qu'un niveau de liquide de la charge de nettoyage à l'intérieur du réacteur de polymérisation soit au moins aussi élevé que le niveau de liquide de la suspension à l'intérieur du réacteur de polymérisation pendant la polymérisation.

10. Procédé selon l'une quelconque des revendications 7 à 9, dans lequel l'introduction du solvent hydrocarboné dans le système de réacteur est arrêtée après la formation d'une charge de nettoyage à l'intérieur du système de réacteur et ensuite le maintien de la charge de nettoyage à l'intérieur du système de réacteur à la température de 100 °C à 180 °C et l'évacuation de la charge de nettoyage à partir du système de réacteur se produisent sans introduction de solvant hydrocarboné supplémentaire.

11. Procédé selon l'une quelconque des revendications 7 à 9, dans lequel, pendant le maintien de la charge de nettoyage à l'intérieur du système de réacteur à une température de 100 °C à 180 °C, un solvant hydrocarboné est introduit en continu dans le système de réacteur et la charge de nettoyage est évacuée en continu à partir du système de réacteur.

12. Procédé selon l'une quelconque des revendications 7 à 11, dans lequel, pour la vidange du système de réacteur avant la reprise de la polymérisation, la circulation de la charge de nettoyage depuis le réacteur de polymérisation à travers ledit un ou lesdits plusieurs premiers échangeurs de chaleur est arrêtée et les contenus dudit un ou desdits plusieurs premiers échangeurs de chaleur et du réacteur de polymérisation sont ensuite évacués.

13. Procédé selon l'une quelconque des revendications 7 à 12, dans lequel la charge de nettoyage évacuée à partir du système de réacteur est transférée dans une cuve d'évaporation agitée qui est conçue pour permettre la soustraction de solvant hydrocarboné par évaporation à partir d'un milieu liquide comprenant un tel solvant hydrocarboné.

14. Procédé selon la revendication 13, dans lequel l'évacuation de la charge de nettoyage à partir du système de réacteur dans le récipient de distillation agité se produit par une différence de pression entre la charge de nettoyage à l'intérieur du système de réacteur et le récipient de distillation agité.

15. Procédé selon l'une quelconque des revendications 2 à 14, dans lequel les polymères d'éthylène obtenus sont des polymères bimodaux ou multimodaux d'éthylène.
